# EUROPEAN PATENT SPECIFICATION

(11) **EP 2 972 841 B1**
(45) Date of publication and mention of the grant of the patent: **12.02.2020**
(21) Application number: 13878300.6
(22) Date of filing: 13.03.2013
(51) Int. Cl.: G06F 9/46, G06T 1/00, G06F 11/32, G06F 11/36

(54) **VISUALIZING RECORDED EXECUTIONS OF MULTI-THREADED SOFTWARE PROGRAMS FOR PERFORMANCE AND CORRECTNESS**
VISUALISIERUNG VON AUFGEZEICHNETEN AUSFÜHRUNGEN VON MULTITHREAD-SOFTWAREPROGRAMMEN FÜR LEISTUNG UND FEHLERFREIHEIT
VISUALISATION D'EXÉCUTIONS ENREGISTRÉES DE PROGRAMMES LOGICIELS MULTIFILS POUR EN VÉRIFIER LES PERFORMANCES ET LA JUSTESSE

(43) Date of publication of application: 20.01.2016
(73) Proprietor: Intel Corporation, Santa Clara, CA 95054 (US)
(72) Inventor: GOTTSCHLICH, Justin E., Santa Clara, California 95054 (US); POKAM, Gilles A., Fremont, California 94555 (US); PEREIRA, Cristiano L., Santa Clara, California 95054 (US); DANNE, Klaus, 38102 Braunschweig (DE); SHILIANG, Hu, Los Atlos, California 94024 (US); KASSA, Rolf, 38122 Braunschweig (DE)
(74) Representative: Rummler, Felix
(86) International application number: PCT/US2013/030745
(87) International publication number: WO 2014/142820

(56) References cited:
- US-A1- 2002 129 306
- US-A1- 2009 319 996
- US-A1- 2009 319 996
- US-A1- 2011 004 827
- US-B1- 6 226 787
- US-B2- 6 961 925
- US-B2- 8 069 446

## Description

### BACKGROUND

With the advent of multi-core processor technology, parallel programming has become ubiquitous. However, due to the non-deterministic nature of parallel programs, multiple executions of the same parallel program with the identical input can produce different outcomes.

Memory race recording (MRR) techniques enable the execution of multi-threaded programs to be recorded, thereby logging the order in which memory accesses interleave. The recordings can be replayed for debugging purposes. When replayed, the recordings produce the same results as those obtained by the original execution. Whereas point-to-point MRR techniques track memory access interleavings at the level of individual shared memory instructions, chunk-based techniques track memory access interleavings by observing the number of memory operations that execute atomically (e.g., without interleaving with a conflicting remote memory access).

US 6226787 B1 relates to dynamic display of operations of a program. It discloses generating a representation of the programs as a visual display of graphs and manipulating the visual display while the program is executed. According to the disclosure, the threads of execution are indicated by forming traces that link nodes of a graph, where the nodes are representative of the sequentially occurring events. The dynamic visualization at run-time is enabled by augmenting the source code of the computer program with stubs that uniquely identify blocks and lines of source code.

US 2009/319996 A1 relates to visualization of thread synchronization events for analysis by a developer. According to the disclosure, a thread blocking synchronization event analysis is based on determinations made using context switch data from a kernel thread scheduler and kernel-level thread unblocking data. Context switch data includes a switched-in thread identity, a switched-out thread identity, a switched-out thread state, at least one thread call stack, and a context switch time of occurrence. Thread unblocking data includes an unblocked thread identity, an unblocking thread identity, at least one thread call stack, and an unblocking synchronization event time of occurrence. The disclosure provides a visualization of the thread synchronization event analysis to help developers understand thread synchronization in their programs.

### SUMMARY OF THE INVENTION

The present invention is defined by the features of the independent claims. Preferred embodiments thereof are defined by features of the dependent claims.

### BRIEF DESCRIPTION OF THE DRAWINGS

The concepts described herein are illustrated by way of example and not by way of limitation in the accompanying figures. For simplicity and clarity of illustration, elements illustrated in the figures are not necessarily drawn to scale. Where considered appropriate, reference labels have been repeated among the figures to indicate corresponding or analogous elements.
FIG. 1 is a simplified block diagram of at least one embodiment of a system for visualizing performance and/or correctness features of an execution of a multi-threaded software program;
FIG. 2 is a simplified block diagram of at least one embodiment of the visualization system of FIG. 1;
FIG. 3 is a simplified block diagram of at least one embodiment of the dynamic replay module of FIG. 2;
FIG. 4 is a simplified illustration of log files relating to an execution of a multi-threaded software program;
FIG. 5 is a simplified flow diagram of at least one embodiment of a method for visualizing performance and/or correctness features of a recorded execution of a multi-threaded software program;
FIG. 6 is a simplified flow diagram of at least one embodiment of a method for preparing recorded software program execution data for visualization;
FIG. 7 is a simplified flow diagram of at least one embodiment of a method for controlling a visualization of a recorded execution of a multi-threaded software program;
FIG. 8 is a simplified flow diagram of at least one embodiment of a method for graphically presenting a visualization of a recorded execution of a multi-threaded software program;
FIG. 9 is a simplified illustration of at least one embodiment of a graphical visualization of a recorded execution of a multi-threaded software program;
FIG. 10 is a simplified illustration of a "zoomed out" version of the graphical visualization of FIG. 9; and
FIG. 11 is a simplified illustration of a "zoomed in" version of the graphical visualization of FIG. 9.

### DETAILED DESCRIPTION OF THE DRAWINGS

While the concepts of the present disclosure are susceptible to various modifications and alternative forms, specific embodiments thereof have been shown by way of example in the drawings and will be described herein in detail.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

The disclosed embodiments may be implemented, in some cases, in hardware, firmware, software, or any combination thereof. The disclosed embodiments may also be implemented as instructions carried by or stored on a transitory or non-transitory machine-readable (e.g., computer-readable) storage medium, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

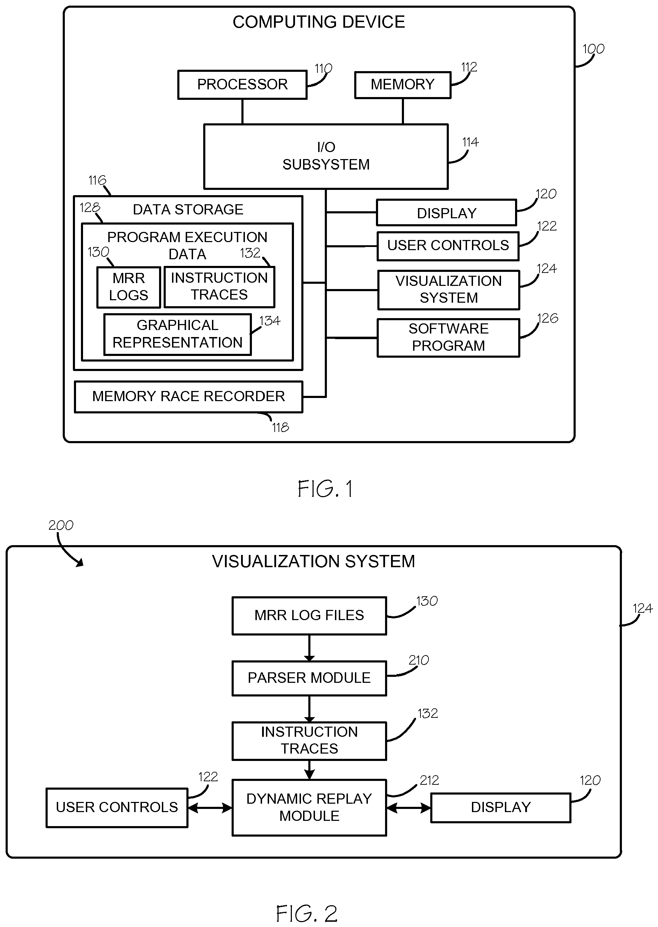

Referring now to FIG. 1, in some embodiments, a system 124 for visualizing an execution of a multi-threaded software program 126 prepares instruction traces 132 based on log files 130 generated by a chunk-based memory race recorder 118 during an execution of the software program 126, and displays an animated graphical representation 134 of the recorded execution to a viewer, such as a programmer or software analyst, on a display 120, as discussed in more detail below. The animated graphical representation 134 includes visual features, such as shapes and colors, that are arranged to highlight performance and correctness features of the recorded execution of the software program 126. As used herein, the term "highlight" means any arrangement or combination of visual features that can serve to call attention to the performance and correctness features in the eyes of the viewer. For example, in some embodiments, the visual features of the multiple threads of the recorded execution are all displayed in the same context. In use, as discussed in more detail below, the visualization system 124 interactively adjusts the display of the animated graphical representation 134 in response to input from the viewer made by, for example, one or more user controls 122. For example, in some embodiments, the system 124 provides interactive controls that allow the viewer to increase or decrease the magnification (e.g., "zoom in" or "zoom out"), increase or decrease the animation speed (e.g., "fast forward" or "rewind"), or rotate the graphical representation 134. By graphically depicting the execution of all concurrently executing threads in the same context, the visualization system 124 enables the interactions between the multiple threads to be visualized in a way that can help the software developer identify performance and/or correctness features that would be difficult or impossible to identify from a mere textual representation of the execution.

The computing device 100 may be embodied as any type of computing device for displaying animated graphical information to a viewer and performing the functions described herein. Although one computing device is shown in FIG. 1, it should be appreciated that the system 124 may be embodied in multiple computing devices 100, in other embodiments. The illustrative computing device 100 includes a processor 110, a memory 112, an input/output subsystem 114, a data storage device 116, the memory race recorder 118, the display 120, user controls 122, the visualization system 124, and the software program 126. Of course, the computing device 100 may include other or additional components, such as those commonly found in a computer (e.g., various input/output devices), in other embodiments. Additionally, in some embodiments, one or more of the illustrative components may be incorporated in, or otherwise from a portion of, another component. For example, the memory 112, or portions thereof, may be incorporated in the processor 110 in some embodiments.

The processor 110 may be embodied as any type of processor currently known or developed in the future and capable of performing the functions described herein. For example, the processor may be embodied as a single or multi-core processor(s), digital signal processor, microcontroller, or other processor or processing/controlling circuit. Similarly, the memory 112 may be embodied as any type of volatile or non-volatile memory or data storage currently known or developed in the future and capable of performing the functions described herein. In operation, the memory 112 may store various data and software used during operation of the system 124 such as operating systems, applications, programs, libraries, and drivers. The memory 112 is communicatively coupled to the processor 110 via the I/O subsystem 114, which may be embodied as circuitry and/or components to facilitate input/output operations with the processor 110, the memory 112, and other components of the computing device 100. For example, the I/O subsystem 114 may be embodied as, or otherwise include, memory controller hubs, input/output control hubs, firmware devices, communication links (i.e., point-to-point links, bus links, wires, cables, light guides, printed circuit board traces, etc.) and/or other components and subsystems to facilitate the input/output operations. In some embodiments, the I/O subsystem 114 may form a portion of a system-on-a-chip (SoC) and be incorporated, along with the processor 110, the memory 112, and other components of the computing device 100, on a single integrated circuit chip.

The data storage 116 may be embodied as any type of device or devices configured for short-term or long-term storage of data such as, for example, memory devices and circuits, memory cards, hard disk drives, solid-state drives, or other data storage devices. In the illustrative embodiment, the visualization system 124 and/or the memory race recorder 118 may maintain program execution data 128, including the MRR log files 130, the instruction traces 132, the graphical representation 134, portions thereof and/or other information, in the data storage 116. As discussed in more detail below, the log files 130 and instruction traces 132 may be used to create the graphical representation 134. Portions of the program execution data 128 may be embodied as any type of digital data capable of display on the display 120. For example, portions of the program execution data 128 may be embodied as binary code, machine- or assembly-level code, text, graphics, and/or other types of content. Portions of the program execution data 128 may be stored in digital files, arrays, databases, tables, and/or other suitable data structures.

The memory race recorder 118 may be embodied as any suitable type of system for recording the execution of a multi-threaded software program in a chunk-based fashion. For example, the memory race recorder 118 may be embodied as a hardware or software system, e.g., a hardware system implemented in the architecture of the processor 110. The memory race recorder 118 records the execution of the multi-threaded software program 126 for later deterministic replay. The memory race recorder 118 is configured so that when the recorded execution is replayed, it is reproduced in the same way as it was recorded during the original execution. To do this, the memory race recorder 118 records the memory access interleavings across the threads so that during replay, those threads can be re-synchronized in the same way as in the original execution. The memory race recorder 118 logs the order in which the memory accesses interleave.

As noted above, the memory race recorder 118 uses a chunk-based approach to track memory access interleavings by observing the number of memory operations that can execute without the intervention of a conflicting shared memory dependency. A "chunk" represents a block of instructions that execute in isolation; that is, without any interleavings with conflicting memory accesses from another thread. In other words, a chunk captures shared memory accesses that occur between adjacent cache coherence requests that cause a conflict between multiple threads. Shared memory refers to memory (e.g., random access memory or RAM) that can be accessed by different processors or processor cores, e.g., in a multiple-core processor. A shared memory system often involves the use of cache memory. Cache coherence refers to the need to update the cache memory used by all processors or processor cores whenever one of the caches is updated with information that may be used by other processors or cores. Thus, a "conflict" or "dependency" can occur if, for example, a processor needs access to information stored in shared memory but must wait for its cache to be updated with data written to the shared memory by another processor. Further discussion of chunk-based memory race recording can be found in, for example, Pokam et al., Architecting a Chunk-based Memory Race Recorder in Modern CMPs, presented at MICRO '09, Association of Computing Machinery (ACM), December 12-16, 2009.

The display 120 of the computing device 100 may be embodied as any one or more display screens on which information may be displayed to the viewer. The display may be embodied as, or otherwise use, any suitable display technology including, for example, an interactive display (e.g., a touch screen), a liquid crystal display (LCD), a light emitting diode (LED) display, a cathode ray tube (CRT) display, a plasma display, and/or other display technology currently known or developed in the future. Although only a single display 120 is illustrated in FIG. 1, it should be appreciated that the computing device 100 may include multiple displays or display screens on which the same or different content may be displayed contemporaneously or sequentially with each other.

The user controls 122 may be embodied as any one or more physical or virtual controls that can be activated by the viewer to, for example, adjust the display of the graphical representation 134. The user controls 122 may be embodied as any suitable user control technology currently known or developed in the future, including, for example, physical or virtual (e.g., touch screen) keys, keyboard or keypad, a mouse, physical or virtual buttons, switches, slides, dials and the like, as well as non-tactile controls such as voice or gesture-activated controls.

The software program 126 may be embodied as any type of multi-threaded or "parallel" machine-executable software program whose execution can be recorded by the memory race recorder 118. The term "multi-threaded" refers, generally, to a software program that is implemented using a programming technique that allows multiple threads to execute independently, e.g., on different processors or cores, where a "thread" refers to a small sequence of programming instructions and the different threads can access shared memory, regardless of the type of synchronization (e.g., locks, transactional memory, or some other synchronization technique) that is used used. For example, the visualization system 124 can visualize shared memory dependency conflicts and/or synchronization contentions, depending on the type of synchronization that is used. An example of a system for visualizing transactional memory is described in Gottschlich, et al., Visualizing Transactional Memory, presented at PACT '12, Association of Computing Machinery (ACM), September 19-23, 2012.

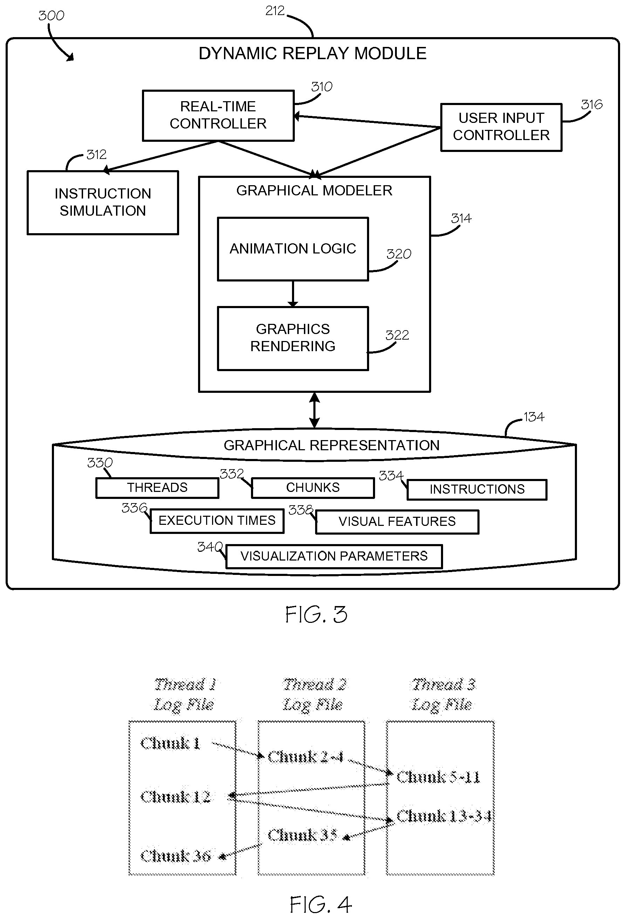

Referring now to FIG. 2, an embodiment 200 of the visualization system 124 includes a parser module 210 and a dynamic replay module 212. The parser module 210 and the dynamic replay module 212 each may be embodied as machine-executable instructions, modules, routines, logic units, or hardware units or devices, for example. The parser module 210 reads the MRR log files 130 and extracts therefrom information about the original execution of the software program 126, e.g., the execution that was recorded by the memory race recorder 118. Such information may include, for example, the number of program instructions in each chunk and the ordering of the chunks across all of the threads. As shown in FIG. 4, the log files 130 may include the shared memory ordering dependencies in the order in which they occurred during the original execution of the software program 126. For instance, as a result of the chunk-based memory race recording, a log file 130 may be created for each thread. Each log file indicates the order of execution of the chunks executing in its corresponding thread and includes or references instruction pointers that indicate the actual order of execution of all of the chunks across all of the threads during the original, recorded execution of the software program 126. This chunk ordering information from the log files 130 is used to preserve the original order of execution of the chunks when the animated graphical representation 134 is displayed. Inasmuch as the log files 130 are typically binary files, the parser module 210 creates therefrom the instruction traces 132, which are essentially human-readable representations of the information extracted from the log files 130.

The instruction traces 132 are used as input to the dynamic replay module 212. The dynamic replay module 212 interfaces with the display 120 and the user controls 122 to create and interactively present the animated graphical representation 134 to the viewer. Referring now to FIG. 3, the dynamic replay module 212 may be embodied as a number of machine-executable instructions, modules, routines, logic units, or hardware units or devices, including a real-time controller module 310, an instruction simulation module 312, a graphical modeler 314, and a user input controller 316. The graphical modeler 314 initially creates and thereafter (e.g., offline) replays the graphical representation 134 in response to requests from the viewer.

The real-time controller 310 controls the animated display of the graphical representation 134 based on its associated visualization parameters 340. The visualization parameters 340 may include playback direction, rate, magnification, and/or orientation, for example. That is, rather than viewing all of the program execution data at once, the real-time controller 310 allows the recorded execution to be "played back" in "real time," at the speed or rate of the original execution. Additionally, the real-time controller 310 can adjust the direction (e.g., forward or backward), magnification, orientation (e.g., rotation), and/or rate or speed at which it replays the original program execution, to allow the viewer to observe events that occur as they unfold, to slow down the playback, to pay greater attention to areas of interest, or to speed up the playback to skip over irrelevant or lesser important areas, for example. As such, the real-time controller 310 interfaces with the user-input controller 316 to process the viewer's requests for changes in the presentation of the animated graphical representation 134.

The real-time controller 310 interfaces with the instruction simulation module 312, to control the display of text corresponding to the instructions executed during the recorded execution, and with the graphical modeler 314, to control the display of the graphical representation 134, in response to input received by the user input controller 316. The user input controller 316 detects activation or deactivation of the user controls 122 and translates those user actions into instructions that can be executed by the real-time controller 310 and the graphical modeler 314, as needed. For instance, if the user input controller 316 detects that the viewer has tapped a "+" graphical control on the display 120, the user input controller 316 may instruct the real-time controller 310 to increase the speed of the playback. Likewise, if the user input controller 316 detects that the user has tapped a magnifying glass icon or made a certain gesture (e.g., moving thumb and forefinger away from each other), the user input controller 316 may instruct the graphical modeler 314 to increase the magnification of the graphical representation 134.

The graphical modeler 314 may be embodied as an animation logic module 320 and a graphics rendering module 322. The animation logic module 320 controls the rate at which the visual features of the graphical representation 134 are presented (e.g., the refresh rate), to provide the animation of the graphical representation 134. For example, in some embodiments, the refresh rate may be in the range of about 50 frames per second or other suitable rate to present the graphical representation 134 in a manner that simulates the original execution in real time. The graphics rendering module 322 initially develops the graphical representation 134 based on the textual information provided by the instruction traces 132, and displays the graphical representation 134 according to the visualization parameters as may be adjusted or updated from time to time by the user input controller 316. The graphics rendering module 322 may apply, e.g., polygon rendering techniques and/or other suitable techniques to display the graphical representation 134 on the display 120.

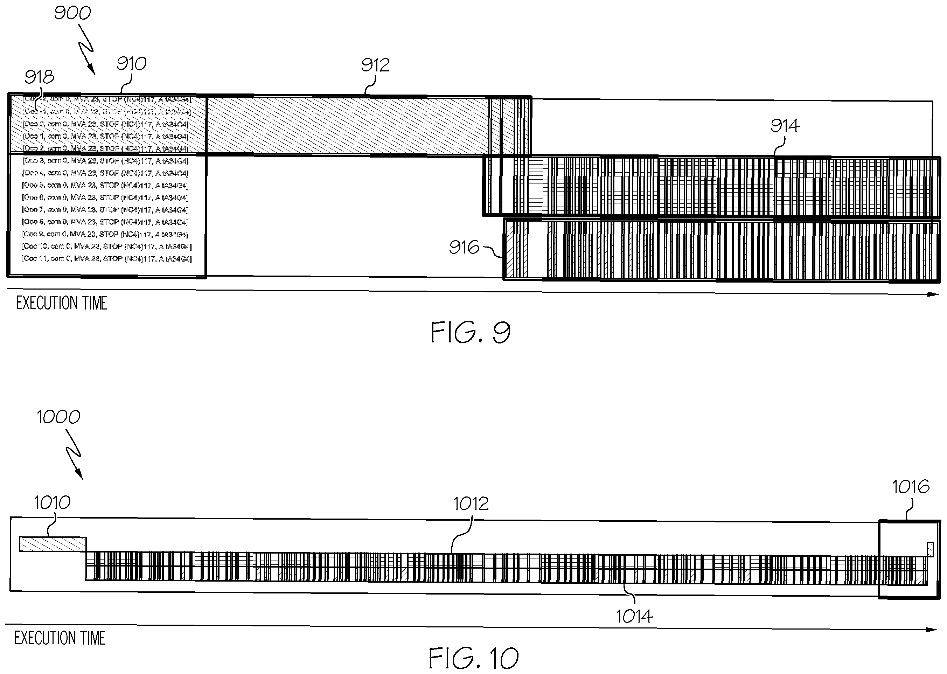

The graphical representation 134 of the original, recorded execution of the multi-threaded software program 126 is stored in a data structure such as an array, container, table, hash, or combination or plurality thereof. The graphical representation 134 includes data relating to the threads 330 executed during the original execution, the chunks 332 executed by each of the threads 330 and the order in which they were executed, the machine-executable instructions 334 associated with each of the chunks 332, the execution times 336 associated with each of the instructions 334 (which may be absolute or relative values), the visual features 338 associated with each of the threads 330, chunks 332, and instructions 334, and the visualization parameters 340 associated with the graphical representation 134. The visual features 338 may include, for example, different colors associated with the different threads 330. The visual features 338 may also include, for example, graphics, such as shapes, which are associated with each chunk 332. For instance, for a given chunk 332, a visual feature 338 may be defined by the number of instructions 334 in the chunk 332 and/or the total execution time for all of the instructions 334 in the chunk 332. In the illustrative visualizations of FIGS. 9-11, for example, the visual features 338 include rectangular bars, where the vertical height of each bar is constant (e.g., so that the bars can be seen visually regardless of the perspective or magnification). In other embodiments, the vertical height of the bars may be variable. For example, the vertical height may be defined by the number of instructions in a chunk 332 or based on some other dynamic signature of the program execution. The horizontal length of each bar is defined by the total execution time of the instructions 334 in the chunk 332. Also, in FIGS. 9-11, the chunks associated with different threads are displayed in different colors, with all chunks associated with the same thread being displayed in the same color. The visualization parameters 340 may include data relating to the replay rate and clock time for the graphical representation 134, and the total size of the recorded program execution (which may be used to normalize the size of the visualization), and/or user-specified parameters as described above.

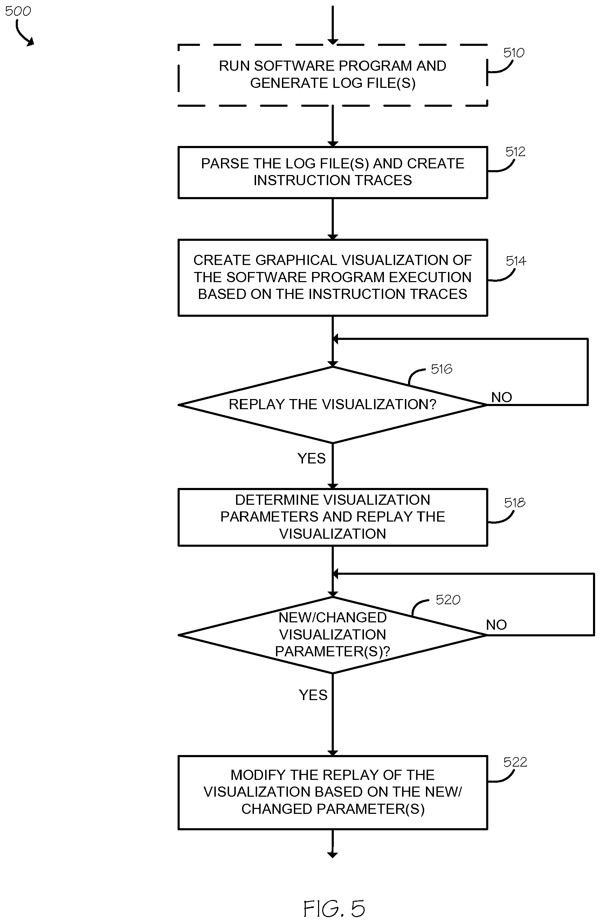

Referring now to FIG. 5, a method 500, which may be implemented as executable instructions, modules, or routines and executed by the computing device 100; for example, by the visualization system 124, is shown. Preliminarily, at block 510, the multi-threaded software program 126 is executed in connection with the memory race recorder 118 to generate the log files 130. As indicated by the dashed lines of block 510, this process can be done externally to the visualization system 124, in some embodiments. The instruction traces 132 are created by parsing the log files 130 at block 512. At block 514, a graphical visualization of the software program execution (e.g., the graphical representation 134) is created based on the instruction traces 132. At block 516, the computing device 100 determines whether a request to replay the visualization has been received (e.g., by the user input controller 316). If not, the computing device 100 ends or awaits such a request. If a request has been received, the computing device 100 proceeds to block 518, where the visualization parameters 340 are determined (e.g., by accessing the graphical representation 134 and/or by user input) and the visualization is replayed on the display 120. At block 520, while still replaying the visualization, the computing device 100 determines whether a new or changed visualization parameter has been received (e.g., by the user input controller 316). If not, the computing device 100 continues replaying the visualization using the current visualization parameters, and continues to await a new or changed parameter. If a new or changed visualization parameter has been received, the method proceeds to block 522, at which the computing device 100 modifies the replay of the visualization based on the new or changed visualization parameters obtained at bock 520, and continues replaying the visualization using the new or changed parameters, until either the end of the visualization is reached or the viewer closes or ends the replay.

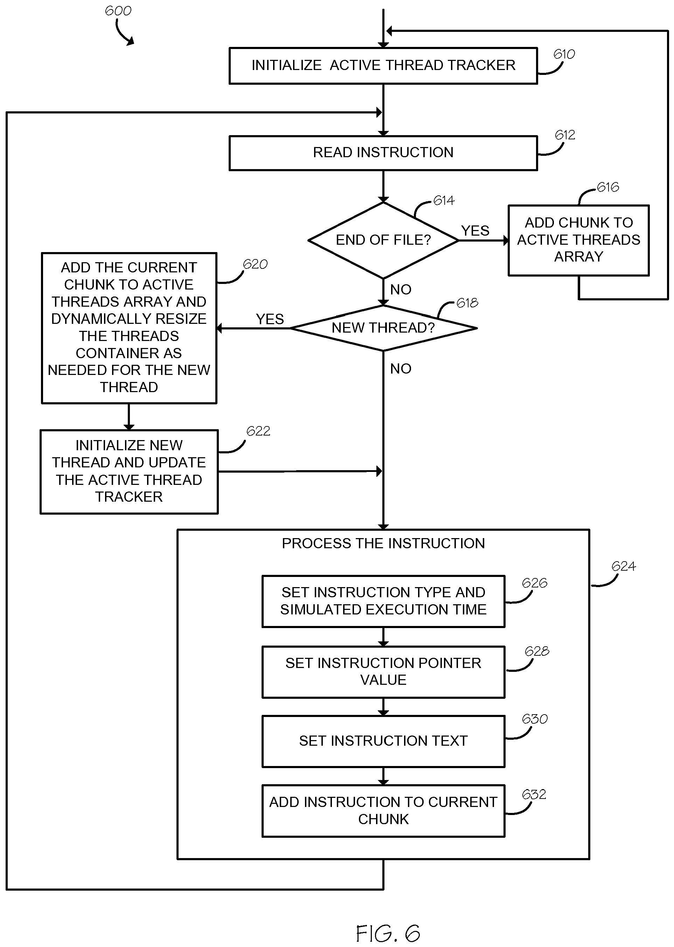

Referring now to FIG. 6, a method 600, which may be implemented as executable instructions, modules, routines, logic units, or hardware units or devices, for example, and executed by the computing device 100; for example, by the parser module 210, is shown. At block 610, the computing device 100 initializes an active thread tracker. The active thread tracker may be embodied as, e.g., a pointer or variable whose value changes as the active thread changes. The active thread tracker keeps track of the thread that is associated with the current chunk. Similarly, a current thread tracker keeps track of the thread associated with the instruction that is currently being read. For example, if the computing device 100 is currently reading the first instruction at the beginning of an instruction trace 132, the values of the active thread tracker and the current thread tracker will be the same. If the computing device 100 then reads an instruction associated with the same thread as the first instruction, the values of the active thread tracker and the current thread tracker will still be the same. However, if the second instruction is associated with a different thread than the first instruction, the value of the current thread tracker will change to reflect the new thread.

At block 612, the computing device 100 reads the next instruction from the instruction trace 132. The instruction line read at block 612 includes the information about the instruction that the visualization system 124 needs to create the textual and graphical simulations of the instruction, e.g., instruction type, mnemonic string, memory operations and arguments. If the computing device 100 has read the last instruction in the instruction trace 132 (block 614), then at block 616, the computing device 100 adds the information for the last chunk (of which the last instruction is a part) to an active threads array. The active threads array stores the chunk-based information needed for the visualization of the program execution. If the computing device 100 has not reached the end of the file, then at block 618, the computing device 100 checks to see if the currently read instruction line is associated with the currently active thread or a new thread. To do so, the computing device 100 may compare the value of the active thread tracker to the value of the current thread tracker. If the instruction line currently being read is associated with a new thread, then at blocks 620 and 622, the computing device 100 adds the current chunk (e.g., the chunk to which the previously read instruction belongs) to the active threads array, dynamically resizes the threads container as needed for the new thread, initializes the container for the new thread and updates the active thread tracker to indicate that the new thread is now the active thread. The threads container is a data store that holds the data for all of the executed threads. Dynamic resizing of the threads container allows the computing device 100 to handle any number of threads of various sizes, without knowing that information in advance. In other words, in some embodiments, the computing device 100 pares the instruction traces 132 without knowing ahead of time how many threads are involved in the recorded program execution or their sizes. As a result, the computing device 100 only needs to read the instruction traces 132 one time.

Whether the current instruction line involves a new thread or the same thread as the previously-read instruction line, the computing device 100 proceeds from block 618 or block 622, as the case may be, to block 624. At block 624, the computing device 100 processes the instruction to prepare the instruction information needed for the visualization. At block 626, the computing device 100 sets the instruction type and determines the simulated execution time for the instruction based on its instruction type. For example, "load" instructions may be defined as having an execution time that is twice as fast as "store" instructions. Other types of instructions may have the same or similar execution times. In some embodiments, the execution times of the instructions are used to determine the length dimension of the visual features 338, as mentioned above.

At block 628, the computing device 100 sets the instruction pointer value for the current instruction based on the instruction line read from the instruction trace 132. The instruction pointer value is used, in some embodiments, to allow the viewer to, during the visualization, refer back to the actual disassembled binary code (e.g., in a log file 130) that is associated with the instruction line of the instruction trace 132. This may be useful for debugging purposes and/or other reasons. At block 630, the computing device 100 sets the mnemonic string associated with the current instruction, based on the information provided in the instruction trace 132. For instance, whereas the log file 130 may contain a binary representation of the current instruction, the mnemonic is a human-readable equivalent of the binary operand (e.g., "store," "load," "jump," etc.), as may be used in assembly code or source code, for example. The mnemonics can be determined by using a translation table or a standard disassembler utility, which often is provided with the operating system installed on the computing device 100. With all of the foregoing information about the current instruction, the computing device 100 proceeds to insert the instruction information into the data store or container for the current chunk. As noted above, the foregoing information needed for the visualization is arranged by chunk, and then the chunk-based information is stored in the threads array, which serves as input to the visualization process (e.g., the dynamic replay module 212). In some embodiments, the threads array may be stored in or as a portion of the graphical representation 134.

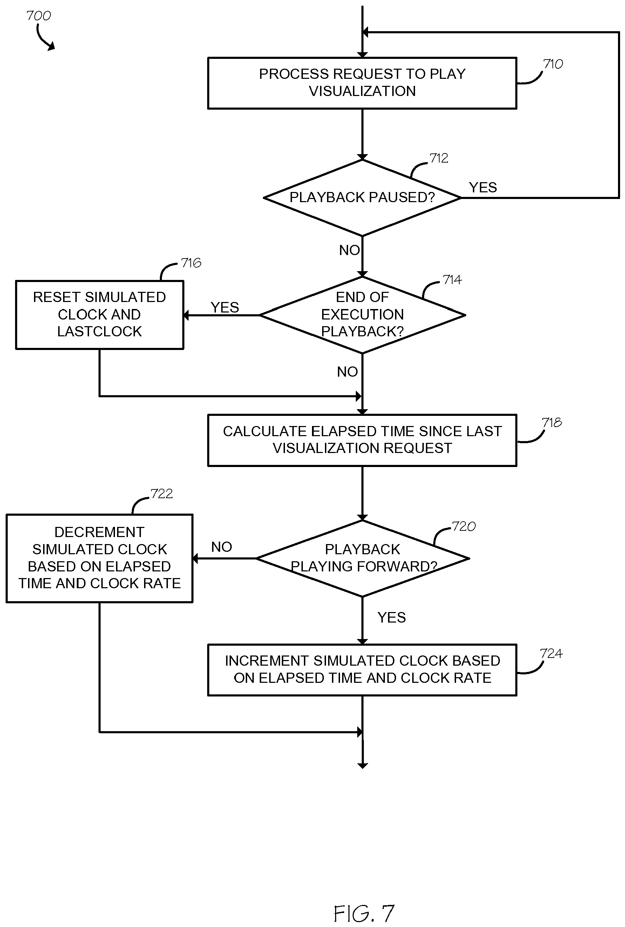

Referring now to FIG. 7, a method 700, which may be implemented as executable instructions, modules, routines, logic units, or hardware units or devices, for example, and executed by the computing device 100; for example, by the real-time controller 310, is shown. At block 710, the computing device 100 processes a request to play a visualization of a previously-recorded execution of a multi-threaded software program (e.g., a graphical representation 134). Such a request may be initiated by the viewer by one or more of the user controls 122 and translated by the user input controller 316 as discussed above. In some embodiments, the request may include a playback rate, playback direction, playback orientation, and/or other visualization parameters as mentioned above. At block 712, the computing device 100 determines whether the playback of the visualization is currently paused. If the playback is paused, the computing device 100 determines whether the visualization has reached the end of the program execution playback, at block 714. In other words, the computing device 100 determines whether the visual features 338 for the last instruction executed during the recorded execution are being displayed. If the last instruction is being displayed, then at block 716, the computing device 100 resets the simulated clock value and the last clock value, at block 716. The simulated clock value keeps track of the overall clock time of the visualization; that is, the time elapsed since the beginning of the replay. The last clock value keeps track of the clock value of the currently displayed point in the execution stream; e.g., the clock time at which the instruction was executed during the original simulation. Keeping track of and adjusting these clock values in response to view inputs allows the system 124 to give the viewer an accurate perception of time that has passed during the program execution, regardless of the number of times the computing device 100 is invoked. If the end of the execution playback has not been reached, then at block 718, the elapsed time since the last visualization request (e.g., the last viewer input) is calculated. At block 720, the computing device 100 determines whether the request is for forward or reverse playback. At blocks 722 and 724, the computing device 100 adjusts the simulated clock accordingly (e.g., increases or decreases the clock time). The simulated clock is adjusted based on the amount of time that has elapsed since the last visualization request and the clock rate. The clock rate corresponds to the speed of the simulation, which may be adjusted by the viewer as described above. For instance, in some embodiments, the clock rate may be increased or decreased by an order of magnitude such as 10x (ten times the current clock rate). By the foregoing, the computing device 100 aims to display an accurate depiction of clock time during the visualization whether the visualization is paused, moving forward or backward, and regardless of the selected playback rate or magnification.

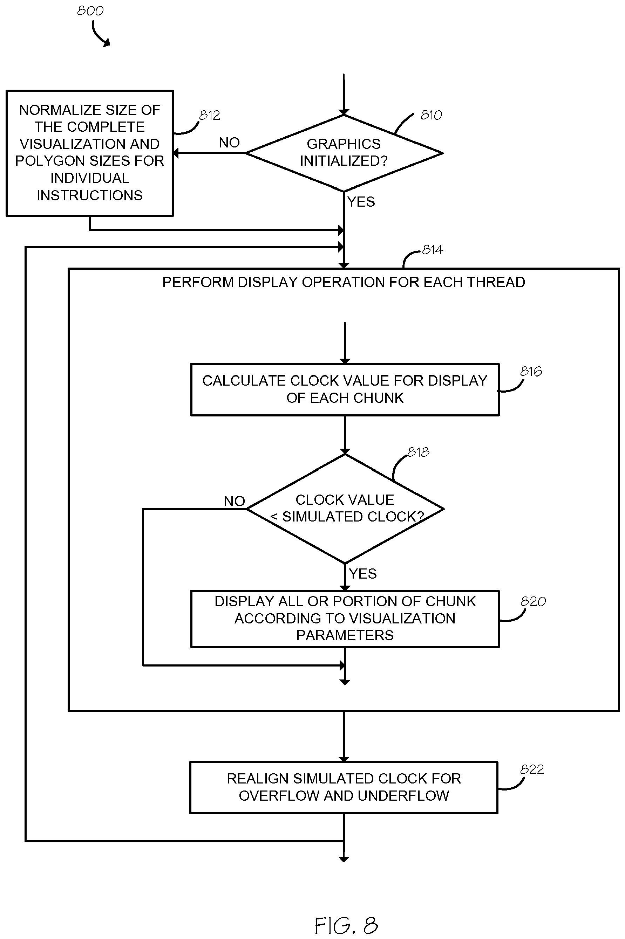

Referring now to FIG. 8, a method 800, which may be implemented as executable instructions, modules, routines, logic units, or hardware units or devices, for example, and executed by the computing device 100; for example, the graphical modeler 314 and/or the real-time controller 310, is shown. At block 810, the computing device 100 determines whether the graphics rendering process is already initialized. If not, the size of the entire visualization (e.g., the graphical representation 134 of the entire recorded program execution) is normalized and the polygon sizes are determined for the individual instructions, at block 812. Normalizing the visualization size allows the system 124 to display the visualization regardless of the total execution time of the recorded software program 126. That is, the visualization routine calculates the total size of the visual features 338 (e.g., length of the rectangles) and divides it evenly over the total execution time so that the system 124 can always display the entire visualization, if requested, no matter how long or short the program execution is. These values may be stored in or as part of the graphical representation 134, in some embodiments. At block 814, the computing device 100 performs the display operation for each thread, e.g.,. draws the applicable polygon in the color assigned to the respective thread, on the display 120. To do this, the computing device 100 calculates the clock value to display in connection with each chunk, at block 816, and determines whether the clock value is less than the simulated clock time to display all or a portion of the chunk, at block 818. In other words, the computing device 100 determines at block 820 whether it can display all or a portion of the current chunk. If not, the chunk is not displayed. However, if so, then at block 820, the computing device 100 displays all of the chunk or the portion that it is capable of displaying given the available clock time, in accordance with the visualization parameters discussed above. For instance, if all of the instructions in the current chunk have a clock value that is less than the current simulated clock time, then the visual features 338 for the entire chunk will be displayed. However, if such clock time is greater than the simulated clock time, then the computing device 100 displays the visual features 338 for one instruction at a time until the simulated clock time is reached. At block 822, the computing device 100 realigns the simulated clock for overflow or underflow, as needed. Overflow is reached when forward playback execution exceeds the last instruction in the execution, while underflow is reached when the backward playback execution exceeds the first instruction in the execution.

Referring now to FIGS. 9-11, illustrative visualizations of a recorded execution of a multi-threaded software program, which may be displayed on the display 120, for example, are shown. The visualization 900 shows the text instruction simulation 910, which includes the human-readable version of the instruction information discussed above. In the text instruction simulation 910, the instruction line 918 is highlighted (e.g., presented in a different color than the rest of the text) to indicate that it is the instruction that is currently executing in the simulation. The visual features 912, 914, and 916 are embodied as a series of rectangular graphics, wherein the color of each of the features 912, 914, 916 indicates the thread in which the instructions were performed. For instance, the feature 912 may be presented in green, indicating an association with a thread #1, while the feature 914 may be presented in blue, indicating an association with a thread #2, and the feature 916 may be presented in yellow, indicating an association with a thread #3. In some embodiments, the vertical height of each of the features 912, 914, 916 is defined by the number of instructions executed by the corresponding thread. So, for example, a vertically taller feature 912, 914, 916 may be representative of a larger number of instructions than a vertically shorter visual feature 912, 914, 916. In other embodiments, the vertical height of the features 912, 914, 916 may be variable based on other factors, or may remain constant. The horizontal length of each of the features 912, 914, 916 represents the total execution time of the instructions executed by the respective thread. The presence of a solid area within each feature 912, 914, 916 indicates the execution of instructions without any interleaving memory accesses that have conflicting dependencies. The size of each of the solid areas within each of the visual features 912, 914, 916 therefore indicates chunks of instructions that have executed without any synchronization or coherence conflict issues. As such, larger blocks of solid areas tend to indicate portions of the program execution that have run without any shared memory communications and thus greater efficiency. The areas of many alternating, smaller blocks of solid areas in the features 912, 914, 916 indicate shared memory communications between the threads, which may indicate a need for optimization in those areas. For instance, a comparison of the features 914 and 916 indicate a large number of shared dependencies between these two threads during the displayed time period. Accordingly, the visualization 900 suggests that rather than focusing on trying to optimize the actual function (e.g., the underlying algorithm) called by these instructions, the programmer should try to identify ways to decrease shared memory communications between these threads, or find ways to create disjoint shared-memory access (e.g., force the threads to access separate areas of shared memory at a given point in time). In other words, by displaying the features 912, 914, 916 for all threads in the same context (e.g., at the same time as they occurred during the original program execution), the visualization 900 reveals the synchronization contention issues that may be addressed to improve the execution performance of the program 126.

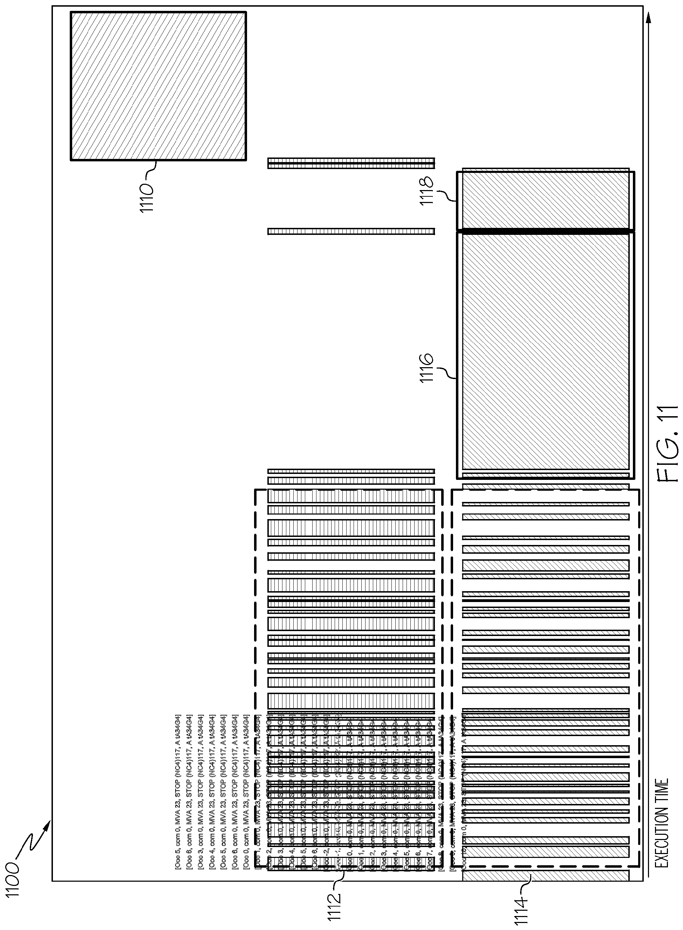

FIG. 10 shows an example of a "zoomed-out" view 1000 of the visualization of FIG. 9, which illustrates how the system 124 allows the viewer to step back and view the entire program execution and look for areas of interest on which to focus his or her attention. In FIG. 10, the visual features 1010, 1012, and 1014 correspond to the execution of different threads, respectively, and are displayed using different colors, in some embodiments. The box 1016 illustrates a user interface control that can be moved across the view 1000 by the viewer to select an area of the view 1000 to focus or zoom in on for more detailed study. The view 1000 may be useful to identify performance and correctness features, including shared memory dependencies and synchronization contentions, as discussed above. FIG. 11 shows an example of a "zoomed-in" or magnified view 1100 of box 1016 of the visualization of FIG. 10. The view 1100 highlights areas of shared memory contentions (e.g., areas 1112, 1114) with boxes displayed in one color, and highlights areas that are relatively free of shared memory contentions (e.g., areas 1110, 1116, 1118) with boxes that are displayed in a different color. In this way, the system 124 can help the viewer quickly see and select specific areas of the visualization for further study. For instance, the viewer may choose to ignore the boxes 1110, 1116, 1118, but zoom in on the boxes 1112, 1114.

To assist a programmer in analyzing the program 126's correctness, the system 124 can present the programmer with a visualization of the entire program execution (e.g., the view 1000) or a visualization of a specific segmented portion of the execution (e.g., the view 1100). In either case, the programmer can use the visualization to identify shared-memory accesses between the threads as discussed above. If the programmer notices that many chunks exist during a particular segment of the program, the programmer can review the portion of the program code associated with those chunks using, for example, the instruction pointer information described above and/or debug symbols associated with the program execution. The programmer may then determine whether those chunks represent intentional interleavings of the threads or if the program is lacking specific serialization in that segment (where serialization could result in larger serialized chunks). In other words, the system 124 can help the programmer determine whether intended interleavings or the lack thereof have been implemented correctly, or whether such programming techniques have been inadvertently omitted, in addition to identifying performance features such as shared memory dependency conflicts and synchronization contentions.

## Claims

1. A visualization system (124) to graphically display performance and correctness features of an execution of a multi-threaded software program (126) on a computing device, the visualization system comprising:
a parser module (210) to prepare program execution data recorded during the execution of the multi-threaded software program for visualization;
a graphical modeler (314) to display an animated graphical representation (134) of the program execution data, the animated graphical representation highlighting one or more of the performance and correctness features; and
a controller module (310) to interactively control the display of the animated graphical representation on a display,
**characterized in that** the parser module is arranged to read the program execution data from a plurality of log files (130) generated by a memory race recording system during the execution of the multi-threaded software program, and to arrange the data according to chunks, wherein each chunk represents a plurality of instructions executed by the same thread without interleaving with a conflicting memory access, and
**in that** the animated graphical representation includes data relating to the execution order of the chunks.

2. The visualization system of claim 1, wherein the parser module prepares instruction traces (132) comprising data relating to instructions executed by the multi-threaded software program during the execution and the threads on which the instructions were executed.

3. The visualization system of claim 1, wherein the graphical modeler displays a plurality of visual features and each visual feature comprises a color representing each chunk such that chunks associated with the same thread are displayed using the same color.

4. The visualization system of claim 3, wherein each instruction (334) in each chunk has an execution time (336), and each visual feature (338) comprises a shape having a size defined by the execution times of the instructions in the chunk.

5. The visualization system of any of claims 1-4, wherein the graphical modeler normalizes the size of the animated graphical representation based on the total execution time of the program.

6. The visualization system of any of claims 1-4, wherein the animated graphical representation highlights a shared memory dependency conflict that occurred during the execution of the multi-threaded software program.

7. The visualization system of any of claims 1-4, wherein the graphical modeler stores data relating to the animated graphical representation for offline replay of the animated graphical representation, and the controller module controls the offline replay of the animated graphical representation.

8. The visualization system of any of claims 1-4, wherein the controller module receives input from a viewer of the animated graphical representation and adjusts the display of the animated graphical representation in response to the input during the display of the animated graphical representation.

9. The visualization system of claim 8, wherein the controller module increases and decreases one or more of: the speed at which the animated graphical representation is displayed in response to the viewer input during the display of the animated graphical representation and the magnification of the display of the animated graphical representation in response to the viewer input during the display of the animated graphical representation.

10. A method for graphically visualizing performance and correctness features of an execution of a multi-threaded software program on a computing device, the method comprising:
reading program execution data recorded by a chunk-based memory race recording system in a plurality of log files during the execution of the multi-threaded software program;
arranging the program execution data according to chunks, wherein each chunk represents a plurality of instructions executed by the same thread without interleaving with a conflicting memory access;
preparing the program execution data for graphical visualization;
displaying an animated graphical representation of the program execution data, the animated graphical representation highlighting one or more of the performance and correctness features and including data relating to the execution order of the chunks; and
controlling the display of the animated graphical representation in response to one or more visualization parameters.

11. The method of claim 10, comprising displaying a plurality of visual features relating to the chunks, wherein each visual feature comprises a color representing each chunk such that chunks associated with the same thread are displayed using the same color.

12. The method of claim 11, wherein each instruction in each chunk has an execution time and each chunk is associated with a number of instructions, and the method comprises defining each visual feature to include a shape having a size defined by the execution times of the instructions in the chunk.

13. The method of claim 10, comprising highlighting in the animated graphical representation a shared memory dependency conflict that occurred during the execution of the multi-threaded software program.

14. One or more machine readable storage media comprising a plurality of instructions stored thereon that in response to being executed result in a computing device performing the method of any of claims 10-13.

## Patentansprüche

1. Visualisierungssystem (124) zum grafischen Anzeigen von Leistungs- und Fehlerfreiheitsmerkmalen einer Ausführung eines Multithread-Softwareprogramms (126) auf einer Rechenvorrichtung, das Visualisierungssystem umfassend:
ein Parser-Modul (210) zum Vorbereiten von Programmausführungsdaten, die während der Ausführung des Multithread-Softwareprogramms aufgezeichnet werden, zur Visualisierung;
einen grafischen Modellierer (314) zum Anzeigen einer animierten grafischen Darstellung (134) der Programmausführungsdaten, wobei die animierte grafische Darstellung eines oder mehrere der Leistungs- und Fehlerfreiheitsmerkmale hervorhebt; und
ein Steuermodul (310) zum interaktiven Steuern der Anzeige der animierten grafischen Darstellung auf einer Anzeige,
**dadurch gekennzeichnet, dass** das Parser-Modul angeordnet ist, um die Programmausführungsdaten aus einer Vielzahl von Protokolldateien (130) zu lesen, die durch ein Speicher-Race-Aufnahmesystem während der Ausführung des Multithread-Softwareprogramms erzeugt werden, und um die Daten gemäß Blöcken anzuordnen, wobei jeder Block eine Vielzahl von Anweisungen darstellt, die durch den gleichen Thread ausgeführt werden, ohne mit einem in Konflikt stehenden Speicherzugriff zu überlappen, und
dadurch, dass die animierte grafische Darstellung Daten in Bezug auf die Ausführungsreihenfolge der Blöcke einschließt.

2. Visualisierungssystem nach Anspruch 1, wobei das Parser-Modul Anweisungsspuren (132) vorbereitet, die Daten in Bezug auf Anweisungen, die durch das Multithread-Softwareprogramm während der Ausführung ausgeführt werden, und die Threads, auf denen die Anweisungen ausgeführt wurden, umfassen.

3. Visualisierungssystem nach Anspruch 1, wobei der grafische Modellierer eine Vielzahl von visuellen Merkmalen anzeigt und jedes visuelle Merkmal eine Farbe umfasst, die jeden Block derart darstellt, dass Blöcke in Verbindung mit dem gleichen Thread unter Verwendung der gleichen Farbe angezeigt werden.

4. Visualisierungssystem nach Anspruch 3, wobei jede Anweisung (334) in jedem Block eine Ausführungszeit (336) aufweist und jedes visuelle Merkmal (338) eine Form umfasst, die eine Größe aufweist, die durch die Ausführungszeiten der Anweisungen in dem Block definiert ist.

5. Visualisierungssystem nach einem der Ansprüche 1-4, wobei der grafische Modellierer die Größe der animierten grafischen Darstellung basierend auf der Gesamtausführungszeit des Programms normalisiert.

6. Visualisierungssystem nach einem der Ansprüche 1-4, wobei die animierte grafische Darstellung einen Konflikt in Bezug auf die Abhängigkeit von einem gemeinsamen Speicher hervorhebt, der während der Ausführung des Multithread-Softwareprogramms aufgetreten ist.

7. Visualisierungssystem nach einem der Ansprüche 1-4, wobei der grafische Modellierer Daten in Bezug auf die animierte grafische Darstellung zur Offline-Wiedergabe der animierten grafischen Darstellung speichert und das Steuermodul die Offline-Wiedergabe der animierten grafischen Darstellung steuert.

8. Visualisierungssystem nach einem der Ansprüche 1-4, wobei das Steuermodul eine Eingabe von einem Betrachter der animierten grafischen Darstellung empfängt und die Anzeige der animierten grafischen Darstellung als Reaktion auf die Eingabe während der Anzeige der animierten grafischen Darstellung einstellt.

9. Visualisierungssystem nach Anspruch 8, wobei das Steuermodul eines oder mehreres erhöht oder verringert von: der Geschwindigkeit, mit der die animierte grafische Darstellung als Reaktion auf die Betrachtereingabe während der Anzeige der animierten grafischen Darstellung angezeigt wird und der Vergrößerung der Anzeige der animierten grafischen Darstellung als Reaktion auf die Betrachtereingabe während der Anzeige der animierten grafischen Darstellung.

10. Verfahren zum grafischen Visualisieren von Leistungs- und Fehlerfreiheitsmerkmalen einer Ausführung eines Multithread-Softwareprogramms auf einer Rechenvorrichtung, das Verfahren umfassend:
Lesen von Programmausführungsdaten, die durch ein blockbasiertes Speicher-Race-Aufnahmesystem aufgenommen wurden, in einer Vielzahl von Protokolldateien während der Ausführung des Multithread-Softwareprogramms;
Anordnen der Programmausführungsdaten gemäß Blöcken, wobei jeder Block eine Vielzahl von Anweisungen darstellt, die durch den gleichen Thread ausgeführt werden, ohne mit einem in Konflikt stehenden Speicherzugriff zu überlappen;
Vorbereiten der Programmausführungsdaten zur grafischen Visualisierung;
Anzeigen einer animierten grafischen Darstellung der Programmausführungsdaten, wobei die animierte grafische Darstellung eines oder mehrere der Leistungs- und Fehlerfreiheitsmerkmale hervorhebt und Daten in Bezug auf die Ausführungsreihenfolge der Blöcke einschließt; und
Steuern der Anzeige der animierten grafischen Darstellung als Reaktion auf einen oder mehrere Visualisierungsparameter.

11. Verfahren nach Anspruch 10, umfassend ein Anzeigen einer Vielzahl von visuellen Merkmalen in Bezug auf die Blöcke, wobei jedes visuelle Merkmal eine Farbe umfasst, die jeden Block derart darstellt, dass Blöcke in Verbindung mit dem gleichen Thread unter Verwendung der gleichen Farbe angezeigt werden.

12. Verfahren nach Anspruch 11, wobei jede Anweisung in jedem Block eine Ausführungszeit aufweist und jeder Block in Verbindung mit einer Anzahl von Anweisungen steht und wobei das Verfahren ein Definieren jedes visuellen Merkmals umfasst, sodass dieses eine Form einschließt, die eine Größe aufweist, die durch die Ausführungszeiten der Anweisungen in dem Block definiert ist.

13. Verfahren nach Anspruch 10, umfassend ein Hervorheben, in der animierten grafischen Darstellung, eines Konflikts in Bezug auf die Abhängigkeit von einem gemeinsamen Speicher, der während der Ausführung des Multithread-Softwareprogramms aufgetreten ist.

14. Ein oder mehrere maschinenlesbare Speichermedien, umfassend eine Vielzahl von darauf gespeicherten Anweisungen, die als Reaktion auf ihre Ausführung dazu führen, dass eine Rechenvorrichtung das Verfahren nach einem der Ansprüche 10-13 durchführt.

## Revendications

1. Système de visualisation (124) pour afficher graphiquement les caractéristiques de performance et de justesse de l'exécution d'un programme logiciel à fils d'exécution multiples (126) sur un dispositif informatique, le système de visualisation comprenant :
un module d'analyseur (210) pour préparer les données d'exécution de programme enregistrées au cours de l'exécution du programme logiciel à fils d'exécution multiples pour visualisation ;
un modélisateur graphique (314) pour afficher une représentation graphique animée (134) des données d'exécution de programme, la représentation graphique animée mettant en évidence une ou plusieurs des caractéristiques de performance et de justesse ; et
un module de contrôleur (310) pour contrôler de manière interactive l'affichage de la représentation graphique animée sur un écran,
**caractérisé en ce que** le module d'analyseur est agencé pour lire les données d'exécution de programme à partir d'une pluralité de fichiers journaux (130) générés par un système d'enregistrement de course de mémoire au cours de l'exécution du programme logiciel à fils d'exécution multiples, et pour agencer les données en fragments, chaque fragment représentant une pluralité d'instructions exécutées par le même fil d'exécution sans s'entrelacer avec un accès mémoire conflictuel,
et **caractérisé en ce que** la représentation graphique animée comprend des données se rapportant à l'ordre d'exécution des fragments.

2. Système de visualisation selon la revendication 1, dans lequel le module d'analyseur prépare des traces d'instructions (132) comprenant des données relatives aux instructions exécutées par le programme logiciel à fils d'exécution multiples au cours de l'exécution et aux fils d'exécution sur lesquels les instructions ont été exécutées.

3. Système de visualisation selon la revendication 1, dans lequel le modélisateur graphique affiche une pluralité de caractéristiques visuelles et chaque caractéristique visuelle comprend une couleur représentant chaque fragment de manière à ce que des fragments associés au même fil d'exécution soient affichés au moyen de la même couleur.

4. Système de visualisation selon la revendication 3, dans lequel chaque instruction (334) dans chaque fragment a un temps d'exécution (336), et chaque caractéristique visuelle (338) comprend une forme ayant une taille définie par les temps d'exécution des instructions dans le fragment.

5. Système de visualisation selon l'une quelconque des revendications 1 à 4, dans lequel le modélisateur graphique normalise la taille de la représentation graphique animée sur la base du temps d'exécution total du programme.

6. Système de visualisation selon l'une quelconque des revendications 1 à 4, dans lequel la représentation graphique animée met en évidence un conflit de dépendance de mémoire partagée qui s'est produit au cours de l'exécution du programme logiciel à fils d'exécution multiples.

7. Système de visualisation selon l'une quelconque des revendications 1 à 4, dans lequel le modélisateur graphique stocke des données se rapportant à la représentation graphique animée pour la relecture hors ligne de la représentation graphique animée, et le module de contrôleur contrôle la relecture hors ligne de la représentation graphique animée.

8. Système de visualisation selon l'une quelconque des revendications 1 à 4, dans lequel le module de contrôleur reçoit une entrée d'un observateur de la représentation graphique animée et ajuste l'affichage de la représentation graphique animée en réponse à l'entrée au cours de l'affichage de la représentation graphique animée.

9. Système de visualisation selon la revendication 8, dans lequel le module de contrôleur augmente et diminue un ou plusieurs paramètres parmi les suivants : la vitesse à laquelle la représentation graphique animée est affichée en réponse à l'entrée du spectateur au cours de l'affichage de la représentation graphique animée et du grossissement de l'affichage de la représentation graphique animée en réponse à l'entrée du spectateur au cours de l'affichage de la représentation graphique animée.

10. Procédé pour visualiser graphiquement les caractéristiques de performance et de justesse de l'exécution d'un programme logiciel à fils d'exécution multiples sur un dispositif informatique, le procédé comprenant les étapes suivantes :
lire des données d'exécution de programme enregistrées par un système d'enregistrement de course de mémoire à base de fragments dans une pluralité de fichiers journaux au cours de l'exécution du programme logiciel à fils d'exécution multiples ;
agencer les données d'exécution de programme en fragments, où chaque fragment représente une pluralité d'instructions exécutées par le même fil d'exécution sans s'entrelacer avec un accès mémoire conflictuel ;
préparer les données d'exécution de programme pour une visualisation graphique ;
afficher une représentation graphique animée des données d'exécution du programme, la représentation graphique animée mettant en évidence une ou plusieurs des caractéristiques de performance et de justesse et incluant des données se rapportant à l'ordre d'exécution des fragments ; et
contrôler l'affichage de la représentation graphique animée en réponse à un ou plusieurs paramètres de visualisation.

11. Procédé selon la revendication 10, comprenant d'afficher une pluralité de caractéristiques visuelles se rapportant aux fragments, où chaque caractéristique visuelle comprend une couleur représentant chaque fragment de manière à ce que les fragments associés au même fil soient affichés au moyen de la même couleur.

12. Procédé selon la revendication 11, dans lequel chaque instruction dans chaque fragment a un temps d'exécution et chaque fragment est associé à un certain nombre d'instructions, et le procédé comprend de définir chaque caractéristique visuelle pour inclure une forme ayant une taille définie par les temps d'exécution des instructions dans le fragment.

13. Procédé selon la revendication 10, comprenant de mettre en évidence, dans la représentation graphique animée, un conflit de dépendance de mémoire partagée qui s'est produit au cours de l'exécution du programme logiciel à fils d'exécution multiples.

14. Un ou plusieurs supports de stockage lisibles par machine comprenant une pluralité d'instructions stockées sur ceux-ci qui, en réponse à leur exécution, conduisent à un dispositif informatique exécutant le procédé de l'une quelconque des revendications 10 à 13.
